# FASCICULE DE BREVET EUROPEEN

(11) **EP 3 051 937 B1**
(45) Date de publication et mention de la délivrance du brevet: **05.07.2017**
(21) Numéro de dépôt: 14789315.0
(22) Date de dépôt: 29.09.2014
(51) Int. Cl.: A01C 7/04, A01C 7/08

(54) **ELEMENT SEMEUR MUNI D'UN DISPOSITIIF PNEUMATIQUE PROPRE ET SEMOIR MONOGRAINE PNEUMATIQUE PRESENTANT AU MOINS UN TEL ELEMENT SEMEUR**
SÄELEMENT MIT EIGENEM PNEUMATISCHEN MITTEL UND PNEUMATISCHE SÄMASCHINE MIT MINDESTENS EINEM SOLCHEN SÄELEMENT
SEEDING ELEMENT WITH AN OWN PNEUMATIC MEANS AND PNEUMATIC SEEDING APPARATUS WITH AT LEAST ONE SUCH SEEDING ELEMENT

(30) Priorité: 30.09.2013 FR 1359399
(43) Date de publication de la demande: 10.08.2016
(73) Titulaire: Kuhn SA (Societe Anonyme), 67700 Saverne (FR)
(72) Inventeur: RENAULT, Stéphane, 67310 Allenwiller (FR); BACH, Vincent, 67260 Sarrewerden (FR); EDLER VON DER PLANITZ, Bruno, 01259 Dresden (DE); AUMER, Wolfgang, 93191 Rettenbach (DE)
(74) Mandataire: Nuss, Laurent
(86) Numéro de dépôt international: PCT/FR2014/052441
(87) Numéro de publication internationale: WO 2015/044612

(56) Documents cités:
- WO-A1-2011/056138
- FR-A- 1 229 027
- FR-A1- 2 730 712
- US-A1- 2008 264 313
- US-A1- 2009 064 910

## Description

La présente invention se rapporte au domaine technique général du machinisme agricole et notamment aux machines agricoles utilisées pour semer les graines. L'invention concerne un élément semeur pneumatique comportant un réservoir destiné à contenir des graines, au moins un dispositif d'implantation et au moins un boîtier de distribution délivrant les graines une à une par l'intermédiaire d'un élément rotatif de dosage, la distribution des graines étant pneumatique. L'invention concerne également un semoir monograine ou semoir de précision équipé de tels éléments semeurs.

Un tel semoir de type monograine avec des éléments semeurs et dont la distribution des graines se fait de manière pneumatique est connu par exemple par les documents WO 2011/056138 ou US 2008/0264313. Chaque élément semeur présente un boîtier de distribution pourvu d'un dispositif rotatif de dosage afin de déposer les graines une à une dans la ligne de semis selon un écartement constant. Sur la majorité des semoirs de ce type, tel que par exemple le semoir monograine MAXIMA (nom déposé) commercialisé par la société KUHN, la distribution se fait par l'intermédiaire d'un disque perforé sur lequel les graines sont aspirées par dépression. La dépression est générée par un dispositif pneumatique centralisé qui alimente l'ensemble des éléments semeurs du semoir. Le flux d'air est acheminé vers chaque boîtier de distribution au travers de tuyaux souples plus ou moins longs. Sachant que les pertes de charge sont proportionnelles à la longueur du tuyau, le flux d'air fourni aux boîtiers de distribution extérieurs est plus faible que le flux d'air fourni aux boîtiers de distribution proches du centre du semoir. Pour assurer une prise de graine optimale pour les boîtiers de distribution extérieurs, la pression d'aspiration doit être réglée dans la plage supérieure de fonctionnement du dispositif pneumatique.

Par le document WO 2011/056138, on connait un semoir avec un dispositif pneumatique centralisé tel que décrit précédemment, dont une partie du flux d'air fourni aux différents boîtiers de distribution est recirculée et une autre partie est utilisée pour l'amenée des graines au sol.

Par le document US 2008/0264313, on connait un semoir monograine avec un premier dispositif pneumatique centralisé assurant la répartition des graines dans différents réservoirs auxiliaires associés chacun à un élément semeur et un second dispositif pneumatique centralisé sous forme de source de vide assistant la distribution des graines au niveau de chaque élément semeur.

Par le document FR 1 229 027, on connait un semoir monograine avec un distributeur dont le type n'est pas précisé et dans lequel un dispositif pneumatique génère de l'air comprimé utilisé pour réaliser un entraînement et une projection vers le sol des graines.

Il est également connu lors du semis de pourvoir le champ de traces parallèles non semées qui serviront de repères pour les appareils de traitement et /ou de fertilisation. Pour matérialiser ces traces, une ou plusieurs distributions du semoir sont désactivées pour éviter d'écraser les futures plantes et surtout pour ne pas gaspiller la semence. La périodicité de ces traces est fonction de la largeur du semoir et de celle des appareils de traitement de manière à éviter les recouvrements et/ou les manques de produits entre deux passages successifs. Le régime de fonctionnement du dispositif pneumatique reste identique quel que soit le nombre de distributions désactivées.

La présente invention a pour but de remédier aux inconvénients précités. Elle doit notamment proposer un semoir monograine dont les performances sont améliorées et dont le rendement énergétique est amélioré.

A cet effet, l'invention a pour objet un élément semeur du type mentionné en introduction de la présente, caractérisé en ce que l'élément semeur comporte en sus un dispositif pneumatique propre, lequel assure de manière autonome la production de flux d'air pour la distribution des graines. Grâce à cette caractéristique, chaque élément semeur est autonome quant à la production de flux d'air pour son boîtier de distribution. Avec un dispositif pneumatique individuel par élément semeur, le flux d'air peut être diminué lorsque la distribution est désactivée. De manière avantageuse, le flux d'air peut être ajusté en fonction de la forme, de la taille, du poids des graines à semer et de la vitesse de rotation de l'élément rotatif de dosage. La baisse de régime de l'un des dispositifs pneumatiques permet de réduire l'énergie requise à son alimentation ce qui se traduit par une réduction de consommation de carburant.

Selon une autre caractéristique additionnelle de l'invention, le dispositif pneumatique s'inscrit dans l'encombrement de l'élément semeur correspondant. Les dimensions et la position du dispositif pneumatique permettent une parfaite intégration dans le volume disponible du semoir. Il ne constitue pas d'obstacle pour les réglages d'écartement entre deux éléments semeurs voisins pour s'adapter aux différentes cultures.

Selon une autre caractéristique de l'invention, le dispositif pneumatique s'étend à proximité du boîtier de distribution. Cette implantation proche du boîtier de distribution réduit considérablement la longueur du tuyau souple nécessaire et par conséquent le phénomène de perte de charges.

Selon une caractéristique avantageuse de l'invention, le dispositif pneumatique est intégré dans le couvercle du boîtier de distribution. Avec une telle caractéristique, le tuyau souple pour acheminer le flux d'air du dispositif pneumatique vers le boîtier de distribution n'est plus nécessaire.

En accord avec un mode de réalisation avantageux de l'invention, l'élément semeur comporte au moins un boîtier de commande, apte et destiné à commander l'animation pour l'entraînement de l'élément rotatif de dosage et/ou le régime de fonctionnement du dispositif pneumatique propre.

Préférentiellement, ledit au moins un boîtier de commande est apte à ajuster le flux d'air produit par le dispositif pneumatique propre, ce en fonction de la forme, de la taille et du poids des graines à semer et/ou en fonction de la vitesse de rotation de l'élément rotatif de dosage.

Conformément à une variante de réalisation, l'élément semeur peut comprendre deux boîtiers de distribution et deux dispositifs d'implantation, disposés respectivement l'un à côté de l'autre, préférentiellement alimentés par un unique dispositif pneumatique.

La présente invention porte également sur un semoir monograine pneumatique présentant un châssis portant au moins un élément semeur, ce semoir étant caractérisé en ce qu'il comporte des éléments semeurs du type décrit précédemment, à savoir au moins deux éléments, avantageusement six ou plus.

Avantageusement, chacun des éléments semeurs constitue un module autonome pouvant être commandé selon les circonstances, individuellement ou de manière groupée (concomitamment avec un, plusieurs ou tous les autres éléments semeurs du semoir), préférentiellement monté en étant interchangeable individuellement, et dont les paramètres de fonctionnement peuvent être adaptés aux graines à semer, voire éventuellement être modifiés en cours de semis.

D'autres caractéristiques et avantages de l'invention se dégageront de la description qui va suivre en regard des dessins annexés qui ne sont donnés qu'à titre d'exemples non limitatifs de l'invention. Sur ces dessins :
- la figure 1 représente une vue latérale d'un élément semeur conforme à l'invention,
- la figure 2A représente une vue de dessus d'un semoir selon l'invention équipé de six éléments semeurs selon la figure 1,
- la figure 2B est une vue de dessus, similaire à celle de la figure 2A, d'un semoir selon l'invention équipé de trois éléments semeurs (dont un est représenté sans réservoir) positionnés de manière séparée et d'une paire d'éléments semeurs positionnés adjacents,
- les figures 3A et 3B représentent des vues de côté d'un semoir conforme à l'invention, tel que représenté sur la figure 2A, un boîtier de commande étant visualisé schématiquement sur la figure 3B,
- la figure 4 représente un élément semeur selon un autre exemple de réalisation.

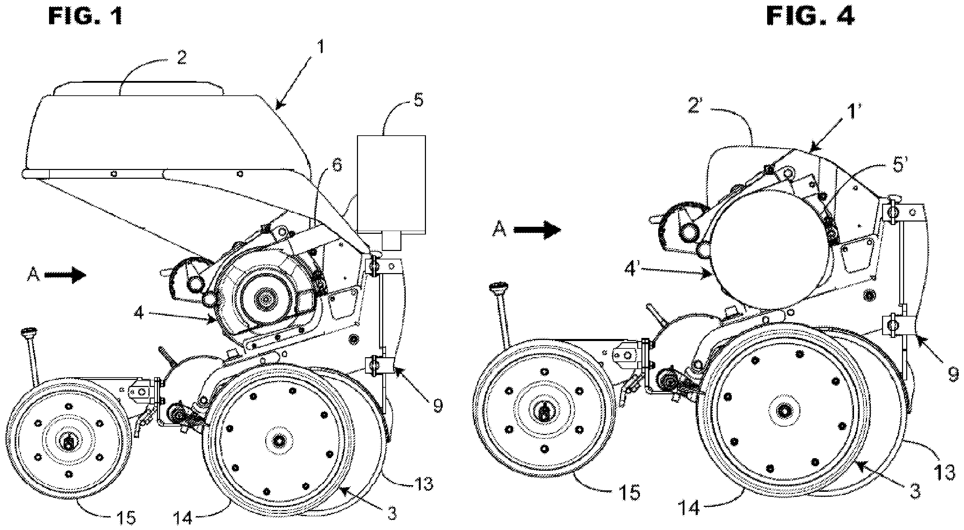

Sur la figure 1 apparaît un élément semeur (1) conforme à l'invention en vue de côté. Cet élément semeur (1) comporte un réservoir (2) destiné à contenir des graines, au moins un dispositif d'implantation (3) et au moins un boîtier de distribution (4) délivrant les graines par l'intermédiaire d'un élément rotatif de dosage. La fonction de l'élément semeur (1) est de distribuer les graines une à une pour obtenir un espacement régulier sur la ligne. La distribution des graines est assistée de façon pneumatique, c'est-à-dire que la sélection des graines et/ ou le transport des graines sélectionnées vers le sol peut être assisté par un flux d'air en dépression ou en pression.

Selon l'invention, l'élément semeur (1) comporte en sus, un dispositif pneumatique (5) propre. Grâce à cette caractéristique, l'élément semeur (1) est autonome quant à la production de flux d'air pour la distribution des graines. Le boîtier de distribution (4) de l'élément semeur (1) est alimenté directement par le dispositif pneumatique (5) correspondant. Avec un dispositif pneumatique (5) propre ou individuel, le flux d'air peut être ajusté selon la forme, la taille et le poids des graines à semer. Le flux d'air est également ajustable en fonction de la vitesse de rotation de l'élément rotatif de dosage. Un tel réglage permet avantageusement d'optimiser le fonctionnement de la distribution de l'élément semeur (1) et d'autre part de réduire la consommation d'énergie. On remarque que les dimensions et la position du dispositif pneumatique (5) sur l'élément semeur (1) sont telles qu'elles ne constituent pas un obstacle pour les différents réglages d'écartements entre deux éléments semeurs voisins. Le dispositif pneumatique (5) s'inscrit dans l'encombrement de l'élément semeur (1) correspondant. Le dispositif pneumatique (5) s'étend en dessous de la partie haute du réservoir (2), il s'inscrit donc dans l'encombrement en hauteur de l'élément semeur (1) correspondant.

Dans l'exemple de réalisation représenté à la figure 1, l'élément semeur (1) possède son propre boîtier de distribution (4) à disque vertical et la sélection des graines est assistée par un flux d'air en dépression. Le boîtier de distribution (4) comporte un carter de forme générale cylindrique et un couvercle. Le disque vertical disposé dans le boîtier de distribution (4) sépare la réserve de graines de la chambre d'aspiration. Il est plan et tourne autour d'un axe de rotation sensiblement horizontal. Le couvercle constitue la partie mobile contenant la chambre d'aspiration. La figure 1 est une vue latérale de l'élément semeur (1), côté couvercle du boîtier de distribution (4). D'une manière particulièrement avantageuse, le dispositif pneumatique (5) s'étend à proximité du boîtier de distribution (4) et fourni la dépression nécessaire à son fonctionnement. Le dispositif pneumatique (5) s'étend sensiblement au-dessus et à l'avant du boîtier de distribution (4) compte tenu du sens d'avance (A). Le dispositif pneumatique (5) est fixé sur l'élément semeur (1). Le flux d'air fourni par le dispositif pneumatique (5) est acheminé dans le boîtier de distribution (4) via un tuyau (6). Le tuyau (6) est raccordé à la chambre d'aspiration. La proximité du dispositif pneumatique (5) et du boîtier de distribution (4) réduit considérablement la longueur du tuyau (6) qui les relie. Le tuyau (6) doit être suffisant long pour pouvoir accéder au disque vertical lorsque le couvercle est ouvert. Le tuyau (6) est de préférence souple. Le disque vertical est à considérer comme l'élément rotatif de dosage. Il présente des perforations disposées à intervalles réguliers sur une circonférence voisine de son pourtour. Les graines sont aspirées par la dépression et plaquées sur les perforations du disque vertical. Lorsque la graine arrive en regard du sol, la dépression au niveau de la perforation cesse pour libérer la graine. Ainsi, les graines sont extraites une à une en vue de les répartir à intervalle constant sur le rang.

Dans un autre exemple de réalisation d'une distribution à pression, de l'air sous pression est utilisé pour plaquer les graines une à une dans les entonnoirs périphériques d'un disque vertical en rotation. L'expulsion au point bas est assistée par un doigt éjecteur. Le dispositif pneumatique (5) fourni, dans ce cas, un flux d'air sous pression pour assister la sélection des graines. Le flux d'air en pression est aussi utilisé pour transporter les graines vers le dispositif d'implantation (3).

Selon une autre variante de réalisation, il peut être prévu que la sélection des graines dans le boîtier de distribution (4) soit réalisée ou assistée par un flux d'air en dépression et que le transfert des graines vers le dispositif d'implantation (3) ou vers le sol soit réalisé ou assisté par un flux d'air en pression. De manière avantageuse, les deux flux d'air (en pression et en dépression) sont, au niveau de l'élément semeur (1,1') concerné, produits par le même dispositif pneumatique (5).

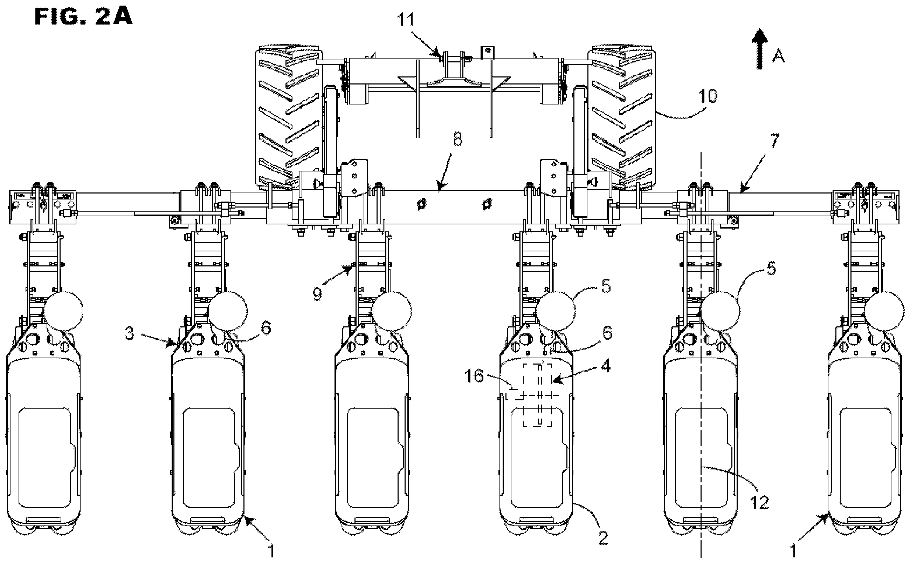

La machine agricole représentée sur la figure 2A est un semoir (7) monograine pneumatique. Il s'agit d'une vue de dessus d'un semoir (7) avec six éléments semeurs (1), généralement un élément semeur par rang. Les six éléments semeurs (1) sont répartis de manière régulière sur le châssis (8). Un tel semoir est utilisé pour des cultures nécessitant un dépôt de graines précis telles que la culture de betteraves, de maïs, de tournesol et de différents légumes. Ces cultures sont semées en lignes distantes pouvant varier de 20 cm à 80 cm. Les éléments semeurs (1) sont répartis suivant un écartement défini et réglable. Le châssis (8) est télescopique, ainsi l'écartement entre les éléments semeurs (1) peut être modifié rapidement. Il comporte une poutre centrale et deux extensions coulissantes telles que décrites dans la demande FR 2 920 266 A1. Les éléments semeurs (1) représentés sur la figure 2A sont écartés de 75 cm pour une culture de maïs. Chaque élément semeur (1) est monté sur un châssis (8) au moyen d'un parallélogramme (9) déformable qui lui permet de se déplacer parallèlement au sol et de suivre les inégalités du sol. Le châssis (8) repose sur le sol via des roues porteuses (10). Le châssis (8) est pourvu d'un système d'attelage (11). De cette manière un tracteur est amené à déplacer le semoir (7) suivant un sens d'avance indiqué par la flèche (A). Dans la suite de la description, les notions suivantes "avant", "arrière" et "devant", "derrière" sont définies par rapport au sens d'avance (A) et les notions "droite" et "gauche" sont définies en regardant le semoir (7), de l'arrière, dans le sens d'avance (A).

D'après cette figure 2A, chacun des six éléments semeurs (1) est équipé d'un dispositif pneumatique (5) propre. Le dispositif pneumatique (5) est disposé à l'avant du réservoir (2) et à droite du plan vertical médian (12) de l'élément semeur (1). Il s'étend plutôt du côté du couvercle du boîtier de distribution (4) c'est à dire côté de la chambre d'aspiration. Le dispositif pneumatique (5) s'inscrit dans l'encombrement en largeur de l'élément semeur (1) correspondant. Le dispositif pneumatique (5) s'étend sensiblement entre le plan vertical médian (12) de l'élément semeur (1) et un plan vertical passant par la paroi latérale droite du réservoir (2). De cette manière, le dispositif pneumatique (5) ne gêne pas pour un réglage de l'écartement entre les éléments semeurs (1) à la valeur minimale. La plage de réglage du semoir (7) n'est donc pas réduite. D'une manière avantageuse, le dispositif pneumatique (5) de chaque élément semeur (1) présente des caractéristiques identiques. Le dispositif pneumatique (5) est un ventilateur ou une turbine. L'entraînement de chaque dispositif pneumatique (5) est individuel. L'entraînement se fait à partir d'une source électrique ou hydraulique provenant du tracteur ou à partir d'une source autonome telle qu'un moteur électrique ou un moteur hydraulique. Lorsque le dispositif pneumatique (5) est entraîné via une source autonome, la variation du flux d'air généré est plus aisée et surtout indépendante du régime moteur du tracteur. L'asservissement à partir d'un moteur électrique est plus précis et plus simple que pour un moteur hydraulique. Avec un moteur électrique, les systèmes de protection par rapport à la limitation de couple sont plus simples, le rendement de fonctionnement est plus élevé. Le raccordement vers le tracteur est plus simple et pratique et surtout moins salissant.

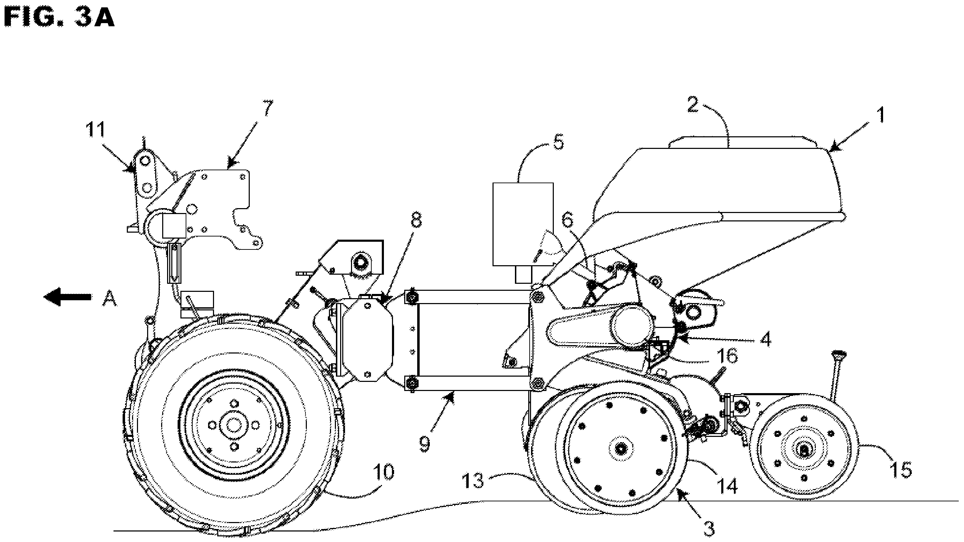

La figure 3A est une vue latérale du semoir (7) avec l'élément semeur extérieur gauche représenté dans une configuration de travail. Le parallélogramme (9) relie l'élément semeur (1) au châssis (8). Avec six éléments semeurs (1), le semoir (7) est porté par le tracteur au moyen du système d'attelage (11) à trois points. Avec un nombre d'éléments semeurs (1) plus important, les roues porteuses (10) du semoir restent au sol lors du transport. Dans l'exemple de réalisation représenté, le boîtier de distribution (4) est disposé entre le réservoir (2) et le dispositif d'implantation (3). Le dispositif d'implantation (3) regroupe des organes d'enterrage (13), des organes de contrôle de profondeur (14) et des organes de recouvrement (15). Le boîtier de distribution (4) est pourvu d'un moteur (16) pour entraîner l'élément rotatif de dosage en rotation. Le moteur (16) est représenté schématiquement sur le quatrième élément semeur (1) de la figure 2A. Avec un tel moteur (16), la vitesse de rotation peut donc être adaptée en continu. Il s'agit d'un moteur électrique ou hydraulique. Dans une alternative, l'entraînement en rotation peut aussi se faire par l'intermédiaire d'un système d'entraînement comportant des pignons et chaines et d'une boîte de vitesses.

Selon une alternative non représentée, le dispositif pneumatique (5) est disposé à l'arrière du boîtier de distribution (4) compte tenu de la direction d'avance (A) et au moins partiellement sous le réservoir (2). Ce dispositif pneumatique (5) est logé dans l'espace entre le réservoir (2) et l'organe de recouvrement (15). Avec une telle disposition, le dispositif pneumatique (5) s'inscrit aussi dans l'encombrement en hauteur et en largeur de l'élément semeur (1).

Au cours du semis, il est d'usage d'interrompre la distribution des graines sur l'un ou plusieurs rangs des rangs pour jalonner un champ. Le jalonnage consiste à matérialiser des traces parallèles non semées dans le champ qui serviront de repères pour le post-traitement à savoir l'épandage d'engrais et/ou les traitements phytosanitaires. Ainsi, les distributions appropriées, correspondant à la voie du tracteur utilisé pour le post-traitement, sont désactivées après un nombre spécifié d'aller-retour du semoir (7) à travers le champ. La périodicité de ces traces est fonction de la largeur du semoir (7) et de celle des appareils de traitement de manière à éviter les recouvrements et/ou les manques de produits entre deux passages successifs. Le boîtier de distribution (4) de chaque élément semeur (1) peut être désactivé ou activé pour ne pas semer de graines. Les futures plantes ne seront donc pas écrasées lors des post-traitements et la semence est économisée. Les éléments semeurs (1) sont équipés, chacun, d'un dispositif permettant de désactiver et d'activer la rotation de l'élément rotatif de dosage.

D'une manière particulièrement avantageuse avec un dispositif pneumatique (5) propre et commandé individuellement, le flux d'air peut être adapté, réduit ou même arrêté lorsque l'élément rotatif de dosage n'est plus entrainé en rotation et que l'élément semeur (1) correspondant est désactivé. Avec un régime de fonctionnement plus faible, la consommation en énergie du dispositif pneumatique (5) ainsi que le bruit sont réduits. Le rendement énergétique du semoir sera amélioré. L'élément semeur (1), dont la distribution est désactivée, reste généralement dans sa position de travail, c'est-à-dire que son dispositif d'implantation (3) est engagé dans le sol. L'élément semeur (1), conforme à l'invention, est donc totalement autonome quant à l'animation de son boîtier de distribution (4) autant pour l'entraînement en rotation de l'élément rotatif de dosage que pour l'assistance pneumatique pour la sélection et/ou le transport des graines. Il sera aussi possible de réduire voire couper le flux d'air lors des demi-tours en bout de champ puisque tous les éléments semeurs (1) sont soulevés hors du sol et que la distribution des graines est arrêtée. Dans le cas d'une distribution pneumatique par dépression, l'aspiration ne doit pas être coupée lorsque la distribution sur un élément semeur (1) est arrêtée pour éviter que les graines sélectionnées sur les perforations ne tombent. Le dispositif pneumatique (5) fournit ainsi un flux d'air en dépression plus faible.

Selon un avantage supplémentaire, le flux d'air fourni par chaque dispositif pneumatique (5) peut être différent sur chaque rang et ainsi être adapté à la taille et au poids de la graine qui est distribuée par l'élément semeur (1). Le réglage du flux d'air pour le maintien des graines sur l'élément rotatif de dosage pourra être affiné individuellement. Chaque dispositif pneumatique (5) est équipé d'un indicateur de pression tel qu'un vacuomètre ou un manomètre. Chaque élément semeur (1) présente au moins un boîtier de commande ou calculateur (17). Il s'agit d'un boîtier de commande électrique et/ou électronique dont la fonction est de commander l'animation pour l'entraînement de l'élément rotatif de dosage et de commander le régime de fonctionnement des dispositifs pneumatiques (5). Dans une alternative, l'élément semeur (1) présente un boîtier de commande (17) pour l'animation de la distribution et un autre boîtier de commande (17) pour le dispositif pneumatique (5). Les différents boîtiers de commande (17) présents sur le semoir (7) sont reliés à un réseau de communication et/ou à un réseau d'alimentation. Un suivi d'information rang par rang pourra aussi être effectué. Les boîtiers de commande (17) sont interconnectés par un réseau de communication par exemple un réseau CAN ou un réseau de communication plus rapide à savoir EtherCAT^{©}. Les boîtiers de commande (17) sont également interconnectés par un réseau d'alimentation en énergie. Il s'agit par exemple d'un réseau d'alimentation en énergie électrique ou hydraulique.

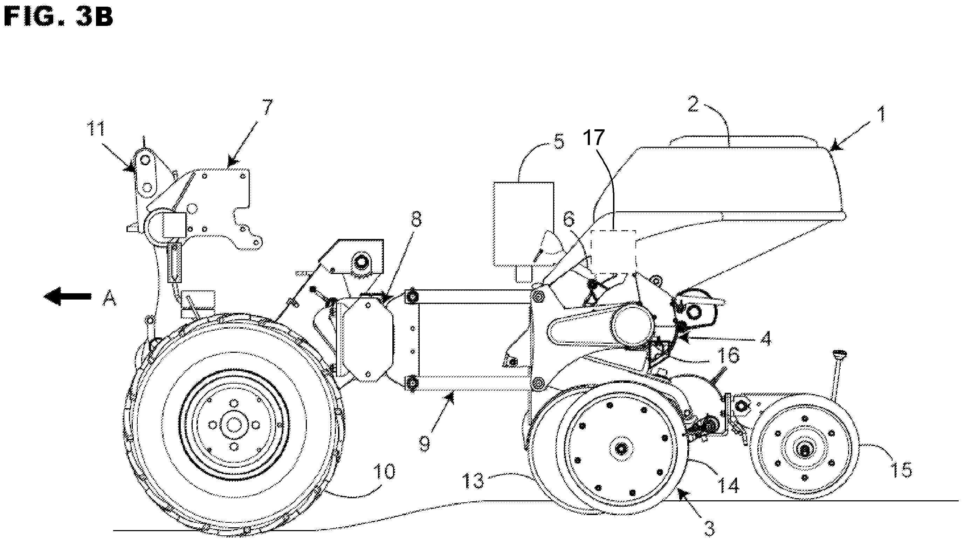

Le ou les boîtier(s) de commande (17) peut(peuvent) être implanté(s) ou intégré(s) à différents endroits au niveau des éléments semeurs (1, 1'). La figure 3B illustre symboliquement une possible localisation d'un tel boîtier de commande (17).

Avantageusement, la commande de l'entraînement des éléments rotatifs de dosage ou celle des dispositifs pneumatiques (5) se fait de manière individuelle. La commande peut également être réalisée par un groupe ou la totalité des éléments semeurs (1).

Il est également de plus en plus répandu, d'interrompre la distribution de graines lorsque le semoir (7) entre dans une zone déjà semée pour éviter le recoupement des lignes de semis et un chevauchement des futures plantes. Avec le dispositif pneumatique (5), selon l'invention, le flux d'air produit pourra aussi être adapté, réduit ou même arrêté tel que décrit précédemment.

La figure 4 correspond à une vue latérale d'un élément semeur selon un autre exemple de réalisation. L'élément semeur (1') représenté est identique à celui décrit ci-avant et représenté sur les figures 1 à 3, sauf en ce qui concerne la contenance de son réservoir (2') et la disposition de son dispositif pneumatique (5'). L'élément semeur (1') présente un réservoir (2') à capacité réduite destiné à être alimenté à distance. Cet élément semeur (1') est destiné à être monté en liaison avec une trémie centralisée qui alimente l'ensemble des rangs. La trémie centralisée est fixée sur le châssis (8) du semoir. Le dispositif pneumatique (5') est intégré dans le boîtier de distribution (4'). D'une manière avantageuse, le dispositif pneumatique (5') est intégré dans le couvercle du boîtier de distribution (4'). Le dispositif pneumatique (5') est directement relié à la chambre d'aspiration du boîtier de distribution (4'), ceci permet d'obtenir une solution compacte. Avec cette intégration, le tuyau (6) entre le dispositif pneumatique et le boîtier de distribution n'est plus nécessaire. Par ailleurs, on remarque aussi que le dispositif pneumatique (5') s'inscrit dans l'encombrement en hauteur et en largeur de l'élément semeur (1'). Il s'inscrit même dans l'encombrement en longueur de l'élément semeur (1'). L'intégration du dispositif pneumatique (5') dans le couvercle est tout à fait possible en liaison avec un réservoir (2) de contenance normal tel que représenté sur la figure 1. Dans cette variante de réalisation également, un ou plusieurs boîtier(s) de commande peut(peuvent) être prévu(s), bien que non représenté(s) sur la figure 4.

Dans un autre exemple de réalisation non représenté, l'élément semeur (1) comporte deux boîtiers de distribution (4) et deux dispositifs d'implantation (3). Les deux dispositifs d'implantation (3) sont aussi disposés l'un à côté de l'autre. Cet élément semeur (1) est capable de semer deux rangs avec un écartement réduit simultanément. Les deux boîtiers de distribution (4) sont disposés l'un à côté de l'autre. Les deux boîtiers de distribution (4) sont alimentés préférentiellement par un seul dispositif pneumatique (5). Il est également possible de prévoir un dispositif pneumatique (5) pour chacun des boîtiers de distribution (4).

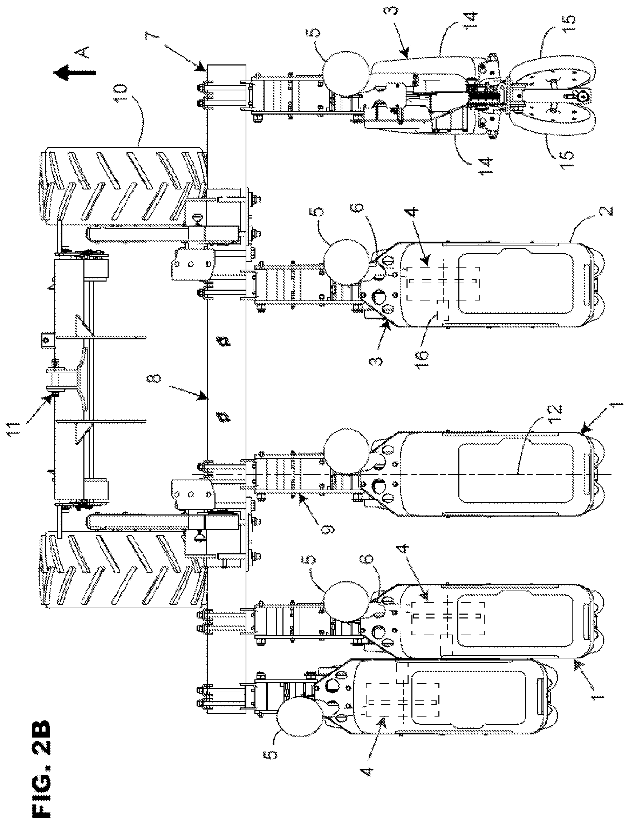

Ainsi, et comme le montre la figure 2B à titre d'exemple, les éléments semeurs (1, 1') peuvent être montés dans le semoir, soit en tant qu'unités individuelles séparées, réparties le long de la poutre transversale du châssis (8), soit en tant qu'unités associées par paires, dans lesquelles les éléments sont arrangées physiquement côte à côte, avec éventuellement un léger décalage mutuel dans la direction d'avance A. Un tel élément semeur double, dont chaque unité comprend son propre réservoir (2), son propre boîtier de distribution (4), son propre dispositif d'implantation (3), son propre dispositif pneumatique (5) et préférentiellement son propre boîtier de commande (17), permet de réaliser des lignes de semis jumelles, c'est-à-dire des lignes de semis avec une distance de séparation faible, notamment le cas échéant inférieure à la dimension latérale d'un élément semeur individuel.

Comme cela ressort de la description qui précède et des figures annexées, chacun des éléments semeurs (1,1') constitue un module autonome pouvant être commandé, individuellement ou de manière groupée, au niveau de l'entraînement du ou des élément(s) rotatif(s) de dosage et/ou du régime de fonctionnement du dispositif pneumatique propre (5,5'), par un ou deux boîtier(s) de commande. La commande des éléments semeurs (1,1') peut être réalisée à partir d'une interface locale du semoir ou à partir d'une interface au niveau du tracteur.

Avec son ou ses boîtier(s) de commande propre(s) (17), chaque élément semeur (1,1') constitue une unité fonctionnelle autonome du point de vue mécanique, pneumatique et électronique, pouvant être programmée individuellement et ne nécessitant pour son fonctionnement qu'une alimentation en énergie et des signaux de commande globaux.

En plus du réglage de leur écartement mutuel, chaque élément semeur (1,1') peut être monté sur le châssis (8) avec faculté d'interchangeabilité individuelle, ledit semoir (7) présentant ainsi une constitution modulaire.

Afin d'aboutir à un semoir polyvalent et apte à semer différents types de graines, nécessitant éventuellement des conditions de semis différentes, il peut être prévu, comme déjà exposé précédemment, que la commande du fonctionnement de chaque élément semeur (1,1'), en particulier de son dispositif pneumatique (5,5') propre et/ou de son ou ses élément(s) rotatif(s) de dosage, est spécifique et adaptée à la forme, taille, nature et/ou poids des graines à semer par l'élément semeur (1,1') considéré.

Ainsi, lors d'une même passe de semis, il est possible de définir une ligne de semis avec un premier type de graines et une ligne de semis voisine avec un second type de graines placées avec un écartement différent dans le sillon concerné.

Enfin, selon une caractéristique additionnelle, le fonctionnement du dispositif pneumatique propre (5,5') de chaque élément semeur (1,1') autonome peut être modifié en cours d'opération de semis, avantageusement par l'intermédiaire d'un boîtier de commande (17), en fonction des conditions de travail rencontrées. On peut ainsi affiner le fonctionnement du semoir et celui des éléments semeur (1,1') (individuellement ou de manière groupée), pour l'adapter, éventuellement en permanence et en quasi temps réel, aux conditions de travail rencontrées, notamment d'humidité, de structure et de consistance du sol.

Il est bien évident que l'invention n'est pas limitée aux modes de réalisation décrits ci-dessus et représentés sur les dessins annexés. Des modifications restent possibles dans la limite définie par les revendications suivantes.

## Revendications

1. Élément semeur (1, 1') comportant un réservoir (2, 2') destiné à contenir des graines, au moins un dispositif d'implantation (3) et au moins un boîtier de distribution (4, 4') délivrant les graines une à une par l'intermédiaire d'un élément rotatif de dosage, la distribution des graines étant pneumatique, **caractérisé en ce que** l'élément semeur (1, 1') comporte en sus, un dispositif pneumatique (5, 5') propre, lequel assure de manière autonome la production de flux d'air pour ladite distribution des graines.

2. Élément semeur selon la revendication 1, **caractérisé en ce que** le dispositif pneumatique (5, 5') s'inscrit dans l'encombrement de l'élément semeur (1, 1').

3. Élément semeur selon la revendication 1 ou 2, **caractérisé en ce que** le dispositif pneumatique (5, 5') s'étend à proximité du boîtier de distribution (4, 4').

4. Élément semeur selon l'une quelconque des revendications 1 à 3, **caractérisé en ce que** le dispositif pneumatique (5, 5') est placé du côté opposé de la réserve de graines du boîtier de distribution (4, 4').

5. Élément semeur selon l'une quelconque des revendications 1 à 4, **caractérisé en ce que** le dispositif pneumatique (5) s'étend sensiblement au-dessus et sensiblement à l'avant du boîtier de distribution (4) compte tenu du sens d'avance (A).

6. Élément semeur selon l'une quelconque des revendications 1 à 4, **caractérisé en ce que** le dispositif pneumatique (5) s'étend à l'arrière, compte tenu du sens d'avance (A), et au moins partiellement sous le réservoir (2).

7. Élément semeur selon l'une quelconque des revendications 1 à 4, **caractérisé en ce que** le dispositif pneumatique (5') est intégré dans le couvercle du boîtier de distribution (4').

8. Élément semeur selon l'une quelconque des revendications 1 à 7, **caractérisé en ce que** le dispositif pneumatique (5, 5') créé un flux d'air en pression ou un flux d'air en dépression.

9. Élément semeur selon l'une quelconque des revendications 1 à 8, **caractérisé en ce que** le dispositif pneumatique (5,5') est entraîné par un moteur hydraulique ou par un moteur électrique.

10. Élément semeur selon l'une quelconque des revendications 1 à 9, **caractérisé en ce qu'**il comporte au moins un boîtier de commande, apte et destiné à commander l'animation pour l'entraînement de l'élément rotatif de dosage et/ou le régime de fonctionnement du dispositif pneumatique (5,5') propre.

11. Élément semeur selon la revendication 10, **caractérisé en ce que** ledit au moins un boîtier de commande est apte à ajuster le flux d'air produit par le dispositif pneumatique propre (5,5') en fonction de la forme, de la taille et du poids des graines à semer et/ou en fonction de la vitesse de rotation de l'élément rotatif de dosage.

12. Élément semeur selon l'une quelconque des revendications 1 à 11, **caractérisé en ce qu'**il comprend deux boîtiers de distribution (4) et deux dispositifs d'implantation (3), disposés respectivement l'un à côté de l'autre, préférentiellement alimentés par un unique dispositif pneumatique (5,5').

13. Elément semeur selon l'une quelconque des revendications 1 à 12, **caractérisé en ce que** le dispositif pneumatique (5,5') crée un flux d'air en pression réalisant ou assistant le transport des graines vers le dispositif d'implantation (3) ou vers le sol, la sélection des graines dans le boîtier de distribution (4) étant réalisée ou assistée par un flux d'air en pression ou en dépression, les deux flux d'air étant produits par le dispositif pneumatique (5,5') propre.

14. Semoir monograine (7) pneumatique présentant un châssis (8) portant au moins un élément semeur (1, 1'), semoir (7) **caractérisé en ce qu'**il comporte des éléments semeurs (1,1') selon l'une quelconque des revendications 1 à 13.

15. Semoir monograine (7) selon la revendication 14, **caractérisé en ce que** les boîtiers de commande (17) des différents éléments semeurs (1,1') sont reliés à un réseau de communication et/ou à un réseau d'alimentation en énergie.

16. Semoir monograine (7) selon l'une quelconque des revendications 14 et 15, **caractérisé en ce que** chacun des éléments semeurs (1,1') constitue un module autonome pouvant être commandé, individuellement ou de manière groupée, au niveau de l'entraînement du ou des élément(s) rotatif(s) de dosage et/ou du régime de fonctionnement du dispositif pneumatique propre (5,5'), par un ou deux boîtier(s) de commande (17).

17. Semoir monograine (7) selon l'une quelconque des revendications 14 à 16, **caractérisé en ce que** chaque élément semeur (1,1') est monté sur le châssis (8) avec faculté d'interchangeabilité individuelle, ledit semoir (7) présentant ainsi une constitution modulaire.

18. Semoir monograine (7) selon l'une quelconque des revendications 14 à 17, **caractérisé en ce que** la commande du fonctionnement de chaque élément semeur (1,1'), en particulier de son dispositif pneumatique (5,5') propre et/ou de son ou ses élément(s) rotatif(s) de dosage, est spécifique et adaptée à la forme, taille, nature et/ou poids des graines à semer par l'élément semeur (1,1') considéré.

19. Semoir monograine (7) selon l'une quelconque des revendications 14 à 18, **caractérisé en ce que** le fonctionnement du dispositif pneumatique propre (5,5') de chaque élément semeur (1,1') autonome est modifié en cours d'opération de semis, avantageusement par l'intermédiaire d'un boîtier de commande, en fonction des conditions de travail rencontrées.

## Patentansprüche

1. Säelement (1, 1'), welches ein Reservoir (2, 2'), das zum Aufnehmen von Samen bestimmt ist, mindestens eine Einpflanzeinrichtung (3) und mindestens eine Verteilereinheit (4, 4') aufweist, welche die Samen einzeln mittels eines rotierenden Dosierelements ausgibt, wobei die Verteilung der Samen pneumatisch erfolgt,
**dadurch gekennzeichnet,**
**dass** das Säelement (1, 1') zudem eine eigene pneumatische Einrichtung (5, 5') aufweist, welche in autonomer Weise das Erzeugen der Luftströmung für die Verteilung der Samen bereitstellt.

2. Säelement nach Anspruch 1,
**dadurch gekennzeichnet,**
**dass** die pneumatische Einrichtung (5, 5') mit der Füllung des Säelements (1, 1') in Verbindung steht.

3. Säelement nach Anspruch 1 oder 2,
**dadurch gekennzeichnet,**
**dass** die pneumatische Einrichtung (5, 5') sich in der Nähe der Verteilereinheit (4, 4') erstreckt.

4. Säelement nach einem der Ansprüche 1 bis 3,
**dadurch gekennzeichnet,**
**dass** die pneumatische Einrichtung (5, 5') dem Samenvorrat der Verteilereinheit (4, 4') gegenüberliegend platziert ist.

5. Säelement nach einem der Ansprüche 1 bis 4,
**dadurch gekennzeichnet,**
**dass** sich die pneumatische Einrichtung (5) in Blickrichtung nach vorne (A) im Wesentlichen oberhalb und im Wesentlichen vor der Verteilereinheit (4) erstreckt.

6. Säelement nach einem der Ansprüche 1 bis 4,
**dadurch gekennzeichnet,**
**dass** sich die pneumatische Einrichtung (5) in Blickrichtung nach vorne (A) nach hinten und zumindest teilweise unter dem Reservoir (2) erstreckt.

7. Säelement nach einem der Ansprüche 1 bis 4,
**dadurch gekennzeichnet,**
**dass** die pneumatische Einrichtung (5') in der Abdeckung der Verteilereinheit (4') integriert ist.

8. Säelement nach einem der Ansprüche 1 bis 7,
**dadurch gekennzeichnet,**
**dass** die pneumatische Einrichtung (5, 5') einen Luftstrom mittels Druck oder einen Luftstrom mittels Unterdruck bereitstellt.

9. Säelement nach einem der Ansprüche 1 bis 8,
**dadurch gekennzeichnet,**
**dass** die pneumatische Einrichtung (5, 5') durch einen Hydraulikmotor oder durch einen Elektromotor angetrieben wird.

10. Säelement nach einem der Ansprüche 1 bis 9,
**dadurch gekennzeichnet,**
**dass** es mindestens eine Steuerungseinheit aufweist, welche geeignet ist und ausgebildet ist die Anregung zum Antreiben des rotierenden Dosierelements und/oder zur Funktion der eigenen pneumatischen Einrichtung (5, 5') zu steuern.

11. Säelement nach Anspruch 10,
**dadurch gekennzeichnet,**
**dass** die mindestens eine Steuerungseinheit geeignet ist, den Luftstrom, der von der eigenen pneumatischen Einrichtung (5, 5') erzeugt wird, in Abhängigkeit der Form, der Größe und des Gewichts des zu säenden Samens und/oder in Abhängigkeit der Rotationsgeschwindigkeit des rotierenden Dosierelements einzustellen.

12. Säelement nach einem der Ansprüche 1 bis 11,
**dadurch gekennzeichnet,**
**dass** es zwei Verteilereinheiten (4) und zwei Einpflanzeinrichtungen (3) aufweist, welche jeweils nebeneinander angeordnet sind und welche in bevorzugter Weise durch eine einzige pneumatische Einrichtung (5, 5') versorgt werden.

13. Säelement nach einem der Ansprüche 1 bis 12,
**dadurch gekennzeichnet,**
**dass** die pneumatische Einrichtung (5, 5') einen Luftstrom mittels Druck bereitstellt, welcher den Transport der Samen in Richtung der Einpflanzvorrichtung (3) oder in Richtung des Bodens realisiert oder unterstützt, wobei die Selektion der Samen in der Verteilereinheit (4) durch einen Luftstrom mittels Druck oder mittels Unterdruck realisiert oder unterstützt wird, wobei die zwei Luftströme durch die eigene pneumatische Einrichtung (5, 5') erzeugt werden.

14. Pneumatische Einzelkornsämaschine (7), welche ein Fahrgestell (8) aufweist, das mindestens ein Säelement (1,1') trägt,
wobei die Sämaschine (7) **dadurch gekennzeichnet, ist,**
**dass** sie Säelemente (1,1') nach einem der Ansprüche 1 bis 13 aufweist.

15. Einzelkornsämaschine (7) nach Anspruch 14,
**dadurch gekennzeichnet,**
**dass** die Steuerungseinheiten (17) der verschiedenen Säelemente (1, 1') mit einem Kommunikationsnetz und/oder mit einem Energieversorgungsnetz verbunden sind.

16. Einzelkornsämaschine (7) nach einem der Ansprüche 14 und 15,
**dadurch gekennzeichnet,**
**dass** jedes Säelement (1, 1') durch ein oder zwei Steuerungseinheiten (17) in Bezug auf das Antreiben des rotierenden Dosierelements oder der rotierenden Dosierelemente und/oder der Funktion der eigenen pneumatischen Einrichtung (5, 5') einzeln oder gruppenweise ein autonomes steuerbares Modul bildet.

17. Einzelkornsämaschine (7) nach einem der Ansprüche 14 bis 16,
**dadurch gekennzeichnet,**
**dass** jedes Säelement (1, 1') auf dem Fahrwerk (8) mit individueller Austauschfähigkeit montiert ist, wodurch die Sämaschine (7) einen modularen Aufbau aufweist.

18. Einzelkornsämaschine (7) nach einem der Ansprüche 14 bis 17,
**dadurch gekennzeichnet,**
**dass** die Steuerung der Funktion von jedem Säelement (1, 1'), insbesondere von dessen eigener pneumatischer Einrichtung (5, 5') und/oder von dessen rotierendem Dosierelement oder rotierenden Dosierelemente, spezifisch ist für und angepasst ist an die Form, Größe, Art und/oder Gewicht der von dem berücksichtigte Säelement (1,1') zu säenden Samen.

19. Einzelkornsämaschine (7) nach einem der Ansprüche 14 bis 18,
**dadurch gekennzeichnet,**
**dass** die Funktion der eigenen pneumatischen Einrichtung (5, 5') von jedem autonomen Säelement (1, 1') im Säbetrieb in vorteilhafter Weise durch eine Steuerungseinheit entsprechend den angetroffenen Arbeitsbedingungen modifiziert wird.

## Claims

1. Sowing element (1, 1') having a reservoir (2, 2') designed to contain seeds, at least one planting device (3) and at least one distribution unit (4, 4') delivering the seeds one by one through the intermediary of a rotary metering element, the distribution of the seeds being pneumatic, **characterised in that** the sowing element (1, 1') also has its own individual pneumatic device (5, 5') which ensures independent production of the stream of air for said distribution of the seeds.

2. Sowing element according to claim 1, **characterised in that** the pneumatic device (5, 5') fits within the overall dimensions of the sowing element (1, 1').

3. Sowing element according to claim 1 or 2, **characterised in that** the pneumatic device (5, 5') extends close to the distribution unit (4, 4').

4. Sowing element according to any one of claims 1 to 3, **characterised in that** the pneumatic device (5, 5') is located on the opposite side to the seed reservoir of the distribution unit (4, 4').

5. Sowing element according to any one of claims 1 to 4, **characterised in that** the pneumatic device (5, 5') extends substantially above and substantially in front of the distribution unit (4) in the direction of advance movement (A).

6. Sowing element according to any one of claims 1 to 4, **characterised in that** the pneumatic device (5) extends to the rear, in the direction of advance movement (A), and at least partially under the reservoir (2).

7. Sowing element according to any one of claims 1 to 4, **characterised in that** the pneumatic device (5, 5') is integrated in the cover of the distribution unit (4').

8. Sowing element according to any one of claims 1 to 7, **characterised in that** the pneumatic device (5, 5') creates a stream of air for pressure or a stream of air for suction.

9. Sowing element according to any one of claims 1 to 8, **characterised in that** the pneumatic device (5, 5') is driven by a hydraulic motor or by an electric motor.

10. Sowing element according to any one of claims 1 to 9, **characterised in that** it comprises at least one control unit which is adapted and designed to control the operation of the rotary metering element and/or the operating speed of its own individual pneumatic device (5, 5').

11. Sowing element according to claim 10, **characterised in that** said at least one control unit is adapted to adjust the stream of air produced by its own individual pneumatic device (5, 5') as a function of the form, size and weight of the seeds to be sowed and/or as a function of the speed of rotation of the rotary metering element.

12. Sowing element according to any one of claims 1 to 11, **characterised in that** it comprises two distribution units (4) and two planting devices (3), disposed respectively one beside the other, preferably supplied by a single pneumatic device (5, 5').

13. Sowing element according to any one of claims 1 to 12, **characterised in that** the pneumatic device (5, 5') creates a stream of air for pressure transporting or helping to transport the seeds towards the planting device (3) or towards the soil, the selection of the seeds in the distribution unit (4) being effected or assisted by a stream of air for pressure or suction, the two streams of air being produced by its own individual pneumatic device (5, 5').

14. Pneumatic single-seed sowing machine (7) having a frame (8) carrying at least one sowing element (1, 1'), the sowing machine (7) being **characterised in that** it comprises sowing elements (1, 1') according to any one of claims 1 to 13.

15. Single-seed sowing machine (7) according to claim 14, **characterised in that** the control units (17) of the different sowing elements (1, 1') are connected to a communications system and/or to a power supply system.

16. Single-seed sowing machine (7) according to any one of claims 14 and 15, **characterised in that** each of the sowing elements (1, 1') constitutes an independent module which can be controlled, individually or in a group, with regard to the operation of the rotary metering element or elements and/or the operating speed of its own individual pneumatic device (5, 5'), by one or two control units (17).

17. Single-seed sowing machine (7) according to any one of claims 14 to 16, **characterised in that** each sowing element (1, 1') is mounted on the frame (8) with individual interchangeability, said sowing machine (7) thus being of modular construction.

18. Single-seed sowing machine (7) according to any one of claims 14 to 17, **characterised in that** the control of the operation of each sowing element (1, 1'), in particular of its own individual pneumatic device (5, 5') and/or of its rotary metering element or elements, is specific and adapted to the form, size, nature and/or weight of the seeds to be sowed by the sowing element (1, 1') concerned.

19. Single-seed sowing machine (7) according to any one of claims 14 to 18, **characterised in that** the operation of the individual pneumatic unit (5, 5') of each independent sowing element (1, 1') is modified in the course of a sowing operation, advantageously through the intermediary of a control unit, as a function of the working conditions encountered.
